# EUROPÄISCHE PATENTSCHRIFT

(11) **EP 3 832 282 B1**
(45) Veröffentlichungstag und Bekanntmachung des Hinweises auf die Patenterteilung: **10.05.2023**
(21) Anmeldenummer: 19213654.7
(22) Anmeldetag: 04.12.2019
(51) Int. Cl.: H01M 10/0525, G01M 99/00, G01M 7/02, H01M 10/42

(54) **PRÜFKAMMER UND VERFAHREN ZUM TESTEN VON PRÜFGUT**
TEST CHAMBER AND METHOD FOR TESTING TEST MATERIAL
CHAMBRE D'ESSAI ET PROCÉDÉ D'ESSAI DU MATÉRIAU D'ESSAI

(43) Veröffentlichungstag der Anmeldung: 09.06.2021
(73) Patentinhaber: Weiss Technik GmbH, 35447 Reiskirchen (DE)
(72) Erfinder: ARNOLD, Dominik Pascal, 67716 Heltersberg (DE); GSCHEIDLE, Lars, 72351 Geislingen (DE); PLUMM, Jürgen, 35578 Wetzlar (DE); URBAN, Jochen, 72336 Balingen (DE)
(74) Vertreter: advotec.

(56) Entgegenhaltungen:
- EP-A2- 1 326 067
- CN-B- 105 241 626
- CN-Y- 201 218 772
- JP-A- 2019 174 404

## Beschreibung

Die Erfindung betrifft eine Prüfkammer sowie ein Verfahren zum Testen von Prüfgut mit einer Prüfkammer, insbesondere Klimakammer zur Konditionierung von Luft, umfassend einen gegenüber einer Umgebung verschließbaren und temperaturisolierten Prüfraum zur Aufnahme von Prüfgut, und eine Temperiervorrichtung zur Temperierung des Prüfraums, wobei die Prüfkammer eine Vibratorvorrichtung umfasst, die in einer in einer Wand des Prüfraums ausgebildeten Öffnung angeordnet ist, wobei Prüfgut innerhalb des Prüfraums auf einem Vibrator der Vibratorvorrichtung anordbar und entsprechend einem vorbestimmten Prüfablauf in einem Prüfzeitabschnitt mechanische Schwingungen am Prüfgut und ein Temperaturwechsel im Prüfraum ausbildbar sind, wobei ein zwischen der Wand und der Vibratorvorrichtung ausgebildeter Spalt mittels einer flexiblen Membran der Prüfkammer abgedichtet ist.

Prüfkammern werden regelmäßig zur Überprüfung von physikalischen und/oder chemischen Eigenschaften von Gegenständen, insbesondere Vorrichtungen, eingesetzt. So sind Temperaturprüfschränke oder Klimaprüfschränke bekannt, innerhalb derer Temperaturen in einem Bereich von -70 °C bis +180 °C eingestellt werden können. Bei Klimaprüfschränken können ergänzend gewünschte Klimabedingungen eingestellt werden, denen dann die Vorrichtung bzw. das Prüfgut über einen definierten Zeitraum ausgesetzt wird. Derartige Prüfkammern können als ein mobiles Gerät ausgebildet sein, welches lediglich mit erforderlichen Versorgungsleitungen mit einem Gebäude verbunden ist und alle zur Temperierung und Klimatisierung erforderlichen Baugruppen umfasst. Eine Temperierung eines das zu prüfende Prüfgut aufnehmenden Prüfraums erfolgt regelmäßig in einem Umluftkanal innerhalb des Prüfraums. In dem Umluftkanal sind ein oder mehrere Wärmetauscher zur Erwärmung oder Kühlung der den Umluftkanal bzw. den Prüfraum durchströmende Luft angeordnet. Dabei saugt ein Lüfter bzw. ein Ventilator die im Prüfraum befindliche Luft an und leitet sie im Umluftkanal zu den jeweiligen Wärmetauschern. Das Prüfgut kann so temperiert oder auch einem definierten Temperaturwechsel ausgesetzt werden. Während eines Prüfintervalls kann dann beispielsweise eine Temperatur zwischen einem Temperarturmaximum und einem Temperaturminimum der Prüfkammer wechseln. Eine derartige Prüfkammer ist beispielsweise aus der DE 10 2016 204 0378 A1 bekannt.

Weiter ist es bekannt Vorrichtungen bzw. Prüfgut im Rahmen eines vorbestimmten Prüfablaufs in Schwingungen zu versetzten um eine Bauteilfestigkeit bzw. ein Verhalten der Vorrichtung bei verschiedenen Temperaturen und mechanischen Belastungen zu überprüfen. Dazu wird regelmäßig eine Vibratorvorrichtung bzw. ein Shaker mit einem Vibratorkopf bzw. einem Vibrator verwendet, auf dem das Prüfgut angeordnet wird. Um nicht die gesamte Vibratorvorrichtung in dem Prüfraum anordnen und einem Temperaturwechsel unterziehen zu müssen, ist in einer prinzipiell beliebigen Wand, beispielsweise in einem Boden, einer Decke oder einer Seitenwand des Prüfraums eine Öffnung ausgebildet, über die zumindest der Vibrator in den Prüfraum hineingeführt ist. Damit kein Luftaustausch zwischen dem Prüfraum und der Umgebung des Prüfraums erfolgen kann, ist der Vibrator bzw. die Vibratorvorrichtung mit einer flexiblen Membran am Prüfraum abgedichtet, sodass ein zwischen der Wand und der Vibratorvorrichtung ausgebildeter Spalt von der flexiblen Membran überbrückt ist. Die flexible Membran kann zumindest teilweise oder vollständig gasdicht ausgebildet sein und erlaubt eine Bewegung des Vibrators relativ zu der Wand bzw. dem Prüfraum. Da kein Luftaustausch zwischen dem Prüfraum und der Umgebung erfolgen kann, kann ein Temperaturwechsel und beispielsweise eine Änderung einer relativen Luftfeuchtigkeit im Rahmen eines Prüfablaufs trotz der Öffnung in der Wand und der Verwendung der Vibratorvorrichtung ohne größere Verluste erfolgen.

Je nach zu prüfendem Prüfgut kann es jedoch auch zu einer Zerstörung des Prüfguts innerhalb des Prüfraums kommen. Energiespeicher, wie beispielsweise Lithium-Ionen-Batterien bzw. Akkumulatoren können dabei in Brand geraten oder sogar explodieren, was regelmäßig auch zu einem Austritt von giftigen Gasen führt. Die stets zur Schwingungsentkopplung und Abdichtung von Prüfraum und Vibratorvorrichtung erforderliche flexible Membran kann bei einer derartigen Zerstörung von Prüfgut ebenfalls leicht zerstört werden, was eine Bedienperson der Prüfkammer und in der näheren Umgebung der Prüfkammer befindliche Anlagen gefährdet.

Aus der CN 105241626 B ist eine Prüfkammer mit einem temperierbaren Prüfraum bekannt, wobei eine Temperatur des Prüfraums durch eine Temperiervorrichtung einstellbar ist. Die Prüfkammer umfasst eine Vibratorvorrichtung mit einem innerhalb des Prüfraums angeordneten Vibarator, wobei ein Spalt zwischen dem Prüfraum und der Vibratorvorrichtung mittels einer Membran abgedichtet ist. Die Membran ist dabei gegenüber niedrigen Temperaturen und Feuchtigkeit beständig ausgebildet.

Die EP 1326067 A2 zeigt eine Prüfkammer mit einem Prüfraum und eine in den Prüfraum hineinragende Vibratorvorrichtung, welche in einer Öffnung einer Wand des Prüfraums angeordnet ist. Dabei ist ein Spalt zwischen einem Kopf der Vibratorvorrichtung und dem Prüfraum mit einer Membran abgedichtet.

Die JP 2019174404 A beschreibt eine weitere Prüfkammer mit einem Prüfraum und einer Vibratorvorrichtung, wobei die Vibratorvorrichtung in eine Öffnung einer Wandung des Prüfraumes hineinragt. Ein Spalt zwischen der Wandung des Prüfraumes und einem Prüfguttisch der Vibratorvorrichtung ist dabei durch eine als eine doppelwandige Membran ausgebildete Manschette abgedichtet.

Der vorliegenden Erfindung liegt daher die Aufgabe zugrunde, eine Prüfkammer und ein Verfahren zum Testen von Prüfgut vorzuschlagen, welche bzw. welches eine sichere Durchführung von Tests mit gefährlichem Prüfgut ermöglicht.

Diese Aufgabe wird durch eine Prüfkammer mit den Merkmalen des Anspruchs 1 und ein Verfahren mit den Merkmalen des Anspruchs 15 gelöst.

Die erfindungsgemäße Prüfkammer, insbesondere Klimakammer zur Konditionierung von Luft, umfasst einen gegenüber einer Umgebung verschließbaren und temperaturisolierten Prüfraum zur Aufnahme von Prüfgut, und eine Temperiervorrichtung zur Temperierung des Prüfraums, wobei die Prüfkammer eine Vibratorvorrichtung umfasst die in einer in einer Wand des Prüfraums ausgebildeten Öffnung angeordnet ist, wobei Prüfgut innerhalb des Prüfraums auf einem Vibrator der Vibratorvorrichtung anordbar und entsprechend einem vorbestimmten Prüfablauf in einem Prüfzeitabschnitt mechanische Schwingungen am Prüfgut und ein Temperaturwechsel im Prüfraum ausbildbar sind, wobei ein zwischen der Wand und der Vibratorvorrichtung ausgebildeter Spalt mittels einer flexiblen Membran der Prüfkammer abgedichtet ist, wobei ein Schott der Prüfkammer die Wand und die Vibratorvorrichtung verbindet, wobei das Schott im Vergleich zur der Membran druckfest und/oder feuerfest ausgebildet ist, wobei das Schott eine in dem Spalt angeordnete thermische Isolationsschicht umfasst.

Unter einem vorbestimmten Prüfablauf wird hier eine Vorgabe von Prüfbedingungen für den vorgesehenen Prüfzeitabschnitt verstanden. Die Prüfbedingungen sind zumindest mechanische Schwingungen mit einer vorgegebener Frequenz und/oder Amplitude, sowie eine definierte Temperatur. Innerhalb des Prüfzeitabschnitts kann ein Temperaturwechsel von einem Temperaturniveau zu einem andern Temperaturniveau und/oder ein Konstanthalten der Temperatur über einen Zeitabschnitt vorgesehen sein.

Neben der Membran, die den Spalt zwischen der Wand und der Vibratorvorrichtung zumindest teilweise oder vollständig gasdicht abdichtet, ist bei der Erfindung ergänzend der Spalt zwischen der Wand und der Vibratorvorrichtung mit dem Schott überbrückt. Das Schott ist druckfest und/oder feuerfest ausgebildet, sodass bei beispielsweise einer Explosion oder einem Brand innerhalb des Prüfraums nicht plötzlich und unerwartet giftige Gase, Flammen, eine Druckwelle, Splitter oder dergleichen durch den Spalt hindurch austreten können, wenn die Membran bei diesem Ereignis zerstört wird. Das Schott ist stets so ausgebildet, dass die Wand von der Vibratorvorrichtung mechanisch entkoppelt ist, sodass Schwingungen der Vibratorvorrichtungen im Wesentlichen nicht auf die Wand des Prüfraums übertragen werden. Dies könnte zu einer Beschädigung beispielsweise der Temperiervorrichtung oder der den Prüfraum umgebenden Wände führen.

Erfindungsgemäß umfasst das Schott eine in dem Spalt angeordnete thermische Isolationsschicht. Die thermische Isolationsschicht kann beispielsweise aus nicht brennbarem Isolierstoff oder aus einem geschäumten, nicht brennbaren Kunststoffmaterial oder Mineralwolle bestehen. Insbesondere durch die Verwendung von Mineralwolle kann eine Feuerfestigkeit des Schotts verbessert werden. Die thermische Isolationsschicht kann so angeordnet sein, dass diese eine eventuell vorhandene Dichtung des Schotts gegenüber dem Prüfraum abgedeckt, die somit vor hohen Temperaturen geschützt ist. Die thermische Isolationsschicht kann zwischen Metallblechen an der Wand, an der Vibratorvorrichtung oder direkt zwischen der Wand und der Vibratorvorrichtung angeordnet sein. Vorteilhaft ist es, wenn die thermische Isolationsschicht von der Membran abgedeckt ist, sodass keine im Prüfraum befindliche Feuchtigkeit in die thermische Isolationsschicht eindringen kann.

Insbesondere kann vorgesehen sein, dass die Membran den Spalt zwischen der Wand und dem Vibrator überbrückt. So befindet sich dann lediglich der Vibrator innerhalb des Prüfraums, wodurch dann die übrige Vibratorvorrichtung nicht den im Prüfraum ausgebildeten Prüfbedingungen, wie beispielsweise einem Temperaturwechsel, ausgesetzt ist.

Das Schott kann den Spalt zwischen der Wand und einem Gehäuse der Vibratorvorrichtung oder den Spalt zwischen der Wand und dem Vibrator überbrücken. Der Vibrator kann in dem Gehäuse der Vibratorvorrichtung so gelagert sein, dass er relativ zu dem Gehäuse Schwingungen mit einer bestimmten Frequenz / Amplitude ausführen kann. Das Gehäuse kann beispielsweise auch in der Öffnung angeordnet sein, sodass der Spalt auch zwischen dem Gehäuse und der Wand ausgebildet ist. Der Spalt zwischen der Wand und dem Vibrator kann dabei breiter und zwischen der Wand und dem Gehäuse vergleichsweise schmaler sein. Alternativ kann das Schott dem Spalt zwischen der Wand und den Vibrator oder zwischen der Wand und dem Gehäuse überbrücken und so den Spalt an dieser Stelle verschließen.

Das Schott kann im Vergleich zu der Membran chemikalienbeständig ausgebildet sein. Bei einer Explosion oder beispielsweise einem Austritt von Chemikalien aus einer Lithium-Ionen-Batterie können diese die flexible Membran zerstören und so gegebenenfalls in die Umgebung gelangen. Die chemikalienbeständige Ausbildung des Schotts, beispielsweise gegenüber Säuren, Laugen oder sonstigen reaktiven Chemikalien kann dies verhindern.

Gemäß einer ersten Ausführungsform kann das Schott durch eine weitere Membran ausgebildet sein, wobei die weitere Membran die Membran gegenüber dem Prüfraum abdecken kann. Die weitere Membran kann zusätzlich zu der bereits verwendeten Membran als das Schott eingesetzt werden. Wesentlich dabei ist, dass die weitere Membran die Membran überdecken und so vor unzuträglichen Einwirkungen aus dem Prüfraum schützen kann. Beispielsweise kann die weitere Membran den Spalt zwischen der Wand und dem Vibrator überbrücken und aus einem anderem Material wie die Membran bestehen. Alternativ ist es jedoch auch denkbar, dass die Membran die weitere Membran gegenüber dem Prüfraum abdeckt, sodass dann die weitere Membran außerhalb des Prüfraums angeordnet ist.

Auch kann das Schott eine zweite flexible Membran aufweisen, wobei die zweite Membran die weitere Membran gegenüber einer Umgebung abdecken kann. Die weitere Membran ist dann von zwei flexiblen Membranen umgeben, sodass die weitere Membran keinerlei unzuträglichen Umgebungseinflüssen oder beispielsweise einer Luftfeuchtigkeit aus dem Prüfraum ausgesetzt ist.

Nach einer weiteren Ausführungsform kann das Schott durch eine Labyrinthdichtung ausgebildet sein, wobei Lamellen der Labyrinthdichtung derart ausgebildet sein können, dass ein Relativbewegung von Vibratorvorrichtung und Wand ermöglicht werden kann. Die Labyrinthdichtung kann beispielsweise aus Metall bestehen und einander gegenüberliegende Lamellen aufweisen, die in Zwischenräume parallelen Lamellen eingreifen. Die Lamellen können entlang des Spalts bzw. in Richtung einer Amplitude bzw. Schwingbewegung angeordnet sein, sodass eine Bewegung der Lamellen relativ zueinander, und damit eine Bewegung der Vibratorvorrichtung bzw. des Vibrators relativ zu der Wand möglich wird. Gleichzeitig kann eine Druckwelle innerhalb der Prüfkammer im wesentlichen nicht aus der Prüfkammer bzw. durch den Spalt hindurchtreten. Um eine Druckentlastung der Prüfkammer herbeizuführen, können auch andere Sicherheitseinrichtungen wie Druckentlastungsklappen, Druckmembranen oder Berstscheiben an dem Prüfraum vorgesehen sein.

Gemäß einer weiteren vorteilhaften Variante kann das Schott durch eine Profildichtung ausgebildet sein, wobei Dichtelemente der Profildichtung derart ausgebildet sein können, dass eine Relativbewegung von Vibratorvorrichtung und Wand ermöglicht werden kann, und wobei die Dichtelemente bei einer unerwarteten Druckerhöhung innerhalb des Prüfraums dichtend zur Anlage gelangen können. Die Profildichtung kann jeweils an der Wand und an einem Gehäuse der Vibratorvorrichtung oder an dem Vibrator angeordnet sein, wobei die Dichtelemente der jeweiligen Profildichtung erst dann aneinander zur Anlage gelangen, wenn eine unerwartete Druckerhöhung innerhalb des Prüfraums, bzw. eine Explosion, auftritt. Das Zusammenführen der Dichtelemente kann dadurch erfolgen, dass entweder die Wand mit der Öffnung bzw. der Prüfraum auf die Vibratorvorrichtung abgesenkt oder die Vibratorvorrichtung in einer Richtung zu der Wand hin bewegt wird. Diese Bewegung kann durch die Druckerhöhung im Prüfraum selbst ausgeführt werden. Weiter können auch elektrische oder pneumatische Aktoren vorgesehen sein, die bei einer Detektion einer Druckerhöhung durch Sensoren betätigt werden können.

Vorteilhaft ist es auch, wenn das Schott durch eine Gleitdichtung ausgebildet ist, wobei Dichtelemente der Gleitdichtung derart ausgebildet sein können, dass eine Relativbewegung von Vibratorvorrichtung und Wand ermöglicht werden kann. Dichtelemente der Gleitdichtung können beispielsweise gegen eine Seitenwand des Vibrators oder eine Seitenwand eines Gehäuses der Vibratorvorrichtung angedrückt werden, sodass der Spalt wesentlich verkleinert und prinzipiell vollständig geschlossen sein kann. Die Dichteelemente können beispielsweise aus Gummi oder anderen, feuerfesten Materialien bestehen.

Nach einer weiteren Ausführungsform kann das Schott mit einer Manschette aus Metall ausgebildet sein. Die Manschette kann eine geometrische Gestalt aufweisen, die eine flexible Bewegung der Manschette ermöglicht. Beispielsweise kann die Manschette in Art eines Faltenbalgs oder aus einem vergleichsweise dünnen Metallblech ausgebildet sein, sodass eine Relativbewegung von Vibratorvorrichtung und Wand möglich bleibt.

Die Manschette kann an der Wand und/oder an der Vibratorvorrichtung starr befestigt sein. So kann die Manschette an der Wand und der Vibratorvorrichtung durch beispielsweise Schrauben befestigt sein und den Spalt überbrücken. Die Manschette kann auch mehrteilig ausgebildet sein und aus einem Federstahl oder einem vergleichsweise weichem Metall bestehen.

Vorteilhaft kann das Schott als Einhausung der Vibratorvorrichtung ausgebildet sein. Die Manschette kann sich beispielsweise entlang der Vibratorvorrichtung soweit fortsetzten, dass ein Gehäuse der Vibratorvorrichtung von dem Schott bzw. der Manschette im Wesentlichen umgeben ist. Das Schott kann dann beispielsweise abschnittsweise mit der Manschette ausgebildet sein und die Vibratorvorrichtung vollständig umgeben bzw. einschließen. Die Vibratorvorrichtung kann auf einem Boden eines Gebäudes aufgestellt sein, wobei dann hier das Schott auch bis an den Boden oder auch unter der Vibratorvorrichtung auf dem Boden entlang geführt sein kann. Diese Einhausung kann besonders einfach aus Metall ausgebildet werden.

Die Prüfkammer kann eine Temperiervorrichtung zur Temperierung des Prüfraums aufweisen, wobei mittels der Temperiervorrichtung eine Temperatur in einem Temperaturbereich von -70 °C bis +180 °C, vorzugsweise -80 °C bis +200 °C innerhalb des Prüfraums ausbildbar sein kann, wobei die Temperiervorrichtung eine Kühleinrichtung mit einem Kühlkreislauf mit einem Kältemittel, einem Wärmeüberträger, der in dem Prüfraum angeordnet sein kann, einem Verdichter, einem Kondensator und einem Expansionsorgan aufweisen kann, wobei die Temperiervorrichtung eine Heizeinrichtung mit einer Heizung und einem weiteren Wärmeübertrager aufweisen kann. Die Heizeinrichtung kann beispielsweise eine elektrische Widerstandsheizung sein, die den Prüfraum beheizt, derart, dass über den weiteren Wärmeübertrager eine Temperaturerhöhung in dem Prüfraum möglich wird. Die Kühleinrichtung weist dann den Wärmeübertrager zur Kühlung der in Prüfraum befindlichen Luft auf. Eine Kühlung des Wärmeübertragers erfolgt mit dem Kühlkreislauf.

Die Prüfkammer kann eine Steuervorrichtung zur Einstellung einer physikalischen Prüfbedingung durch eine Steuerung und/oder Regelung einer Lufttemperatur, einer relativen Luftfeuchte, einer Korrosionsatmosphäre in dem Prüfraum und/oder einer Bauteilfestigkeit aufweisen. Die Steuervorrichtung kann beispielsweise eine Heizeinrichtung und eine Kühleinrichtung einer Temperiervorrichtung der Prüfkammer so steuern, dass eine Kühlung oder Erwärmung der im Prüfraum umgewälzten Luft möglich ist und eine Lufttemperatur innerhalb des Prüfraums in einem für einem Prüfablauf vorgesehenen Temperaturbereich ausgebildet werden kann. Je nach Ausbildung der Prüfkammer kann die Steuervorrichtung auch eine Korrosionsatmosphäre in dem Prüfraum ausbilden und zur Steuerung der Vibratorvorrichtung verwendet werden. Die Steuervorrichtung kann dann auch zur Prüfung einer Bauteilfestigkeit des Prüfguts eingesetzt werden. Gleich wohl ist es auch möglich die Temperiervorrichtung und die Vibratorvorrichtung der Prüfkammer unabhängig voneinander mit jeweils eigenen Steuervorrichtungen zu steuern.

Bei dem erfindungsgemäßen Verfahren zum Testen von Prüfgut in einem gegenüber einer Umgebung verschließbaren temperaturisolierten Prüfraum einer Prüfkammer, insbesondere Klimakammer zum Konditionierung von Luft, wird mittels einer Temperiervorrichtung der Prüfkammer der Prüfraum mit dem Prüfgut temperiert, wobei Prüfgut innerhalb des Prüfraums auf einem Vibrator einer Vibratorvorrichtung der Prüfkammer angeordnet und entsprechend einem vorbestimmten Prüfablauf in einem Prüfzeitabschnitt mechanische Schwingungen am Prüfgut und ein Temperaturwechsel im Prüfraum ausgebildet werden, wobei die Vibratorvorrichtung in einer in einer Wand des Prüfraums ausgebildeten Öffnung angeordnet wird, wobei zwischen der Wand und der Vibratorvorrichtung ein Spalt ausgebildet wird, wobei der Spalt mittels einer flexiblen Membran der Prüfkammer abgedichtet wird, wobei die Wand und die Vibratorvorrichtung mit einem Schott der Prüfkammer verbunden wird, wobei das Schott im Vergleich zu der Membran druckfest, und/oder feuerfest ausgebildet wird, wobei das Schott eine in dem Spalt angeordnete thermische Isolationsschicht umfasst. Zu den Vorteilen des erfindungsgemäßen Verfahrens wird auf die Vorteilsbeschreibung der erfindungsgemäßen Prüfkammer verwiesen.

Als Prüfgut kann eine Batterie oder ein Akkumulator, bevorzugt ein Lithium-Ionen-Akkumulator verwendet werden. Die Verwendung wird dadurch möglich, dass die Prüfkammer ein Schott aufweist welches im Vergleich zur Membran druckfest und/oder feuerfest ausgebildet ist.

Das Prüfgut kann in dem Prüfraum betrieben und zumindest einer physikalischen Prüfbedingung ausgesetzt werden. Beispielsweise kann ein Akkumulator als Prüfgut hohen Temperaturen ausgesetzt und gleichzeitig geladen werden.

Weitere vorteilhafte Ausführungsformen des Verfahrens ergeben sich aus den Merkmalsbeschreibungen der auf den Vorrichtungsanspruch 1 zurückbezogenen Unteransprüche.

Nachfolgend werden bevorzugte Ausführungsformen der Erfindung unter Bezugnahme auf die beigefügten Zeichnungen näher erläutert.

Es zeigen:
- **Fig. 1**: eine schematische Querschnittsansicht einer Prüfkammer mit einer ersten Ausführungsform eines Schotts;
- **Fig. 2**: eine Querschnittsansicht einer zweiten Ausführungsform eines Schotts;
- **Fig. 3**: eine Querschnittsansicht einer dritten Ausführungsform eines Schotts;
- **Fig. 4**: eine Querschnittsansicht einer vierten Ausführungsform eines Schotts.

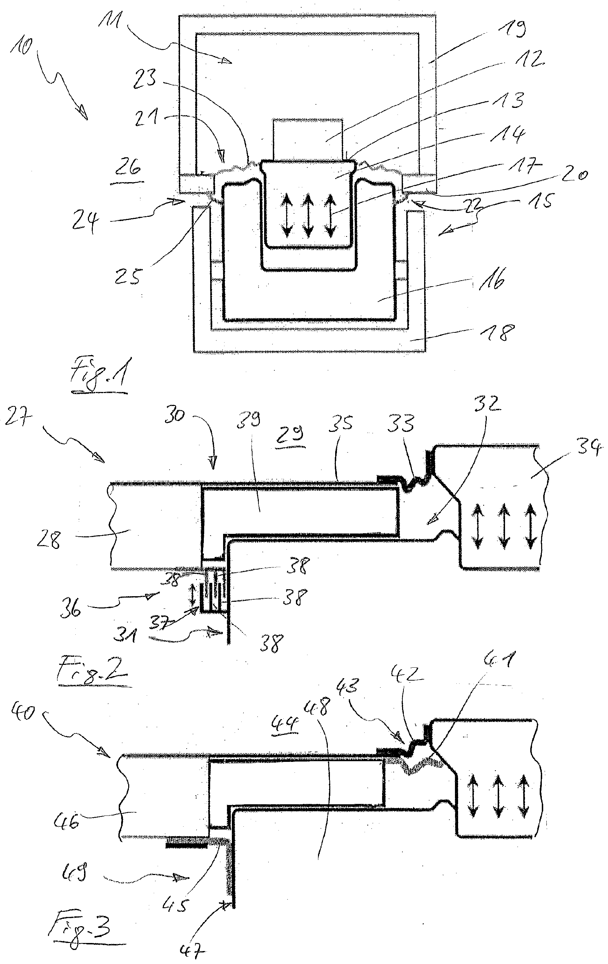

Die **Fig. 1** zeigt eine schematische Querschnittsansicht einer Prüfkammer 10, die einen Prüfraum 11 aufweist, in dem Prüfgut 12 angeordnet ist. Das Prüfgut 12 kann ein Akkumulator oder Batterie sein und innerhalb des Prüfraums 11 einem definierten Temperaturwechsel ausgesetzt werden. Das Prüfgut 12 ist auf einer Kontaktfläche 13 eines Vibrators 14 einer Vibratorvorrichtung 15 fest positioniert, sodass das Prüfgut 12 Schwingungen einer definierten Frequenz und Amplitude ausgesetzt werden kann. Die Vibratorvorrichtung 15 umfasst weiter ein Gehäuse 16 zu dem der Vibrator 14 relativ in Richtung der Pfeile 17 bewegbar ist. Die Vibratorvorrichtung 15 umfasst weiter einen Sockel 18, an dem das Gehäuse 16 schwingungsgedämpft gelagert ist.

Der Prüfraum 11 ist selbst aus temperaturisolierten Wänden 19, 20 ausgebildet, wobei in der Wand 20 eine Öffnung 21 ausgebildet ist, in die die Vibratorvorrichtung 15 in den Prüfraum 11 hineinragt. Ein Spalt 22 zwischen der Wand 20 und der Vibratorvorrichtung 15 ist mittels einer flexiblen und zumindest teilweise oder vollständig gasdicht ausgebildeten Membran 23 abgedichtet, die den Spalt 22 zwischen der Wand 20 und dem Vibrator 14 überbrückt.

Weiter ist ein Schott 24 der Prükammer 10 vorgesehen, welches die Wand 20 und die Vibratorvorrichtung 15 verbindet. Das Schott 24 ist im Vergleich zu der Membran 23 druckfest und/oder feuerfest ausgebildet. Bei der in der **Fig. 1** gezeigten Ausführungsform ist das Schott 24 als eine Manschette 25 aus Metall ausgebildet, welche an der Wand 20 und dem Gehäuse 16 starr befestigt ist. Die Manschette 25 ist dabei noch soweit flexibel, dass eventuelle Vibrationen des Gehäuses 16 nicht wesentlich auf die Wand 20 übertragen werden.

Eine eventuelle Beschädigung des Prüfguts 12 im Rahmen des Prüfablaufs kann beispielsweise zu einem Brand, einer Explosion oder einem Austritt von Gasen oder Chemikalien innerhalb des Prüfraums 11 führen. Sofern es in diesem Zusammenhang zu einer Beschädigung der Membran 23 kommen sollte, kann durch das vergleichsweise druckfeste bzw. feuerfeste Schott 24 eine Umgebung 26 der Prüfkammer 10 schützend abgeschirmt werden.

Die **Fig. 2** zeigt eine abschnittsweise Schnittdarstellung einer Prüfkammer 27, bei der eine Wand 28 eines Prüfraums 29 ebenfalls mit einer Öffnung 30 und einer in den Prüfraum 29 hineinragenden Vibratorvorrichtung 31 ausgebildet ist. In einem so zwischen der Wand 28 und der Vibratorvorrichtung 31 ausgebildeten Spalt 32 ist zur Abdichtung des Spalts 32 bzw. des Prüfraums 29 eine flexible Membran 33 angeordnet. Die Membran 33 überbrückt einen Vibrator 34 der Vibratorvorrichtung 31 und einem Metallblech 35, welches in Fortsetzung der Wand 28 an dieser angeordnet ist. An dem Spalt 32 ist ein Schott 36 als eine Labyrinthdichtung 37 ausgebildet. Die Labyrinthdichtung 37 weist Lamellen 38 auf, die ineinandergreifen und in Richtung einer Bewegung des Vibrators 34 so angeordnet sind, dass die Vibratorvorrichtung 31 von der Wand 28 mechanisch entkoppelt ist. Gleichwohl ist das so ausgebildete Schott 36 im Vergleich zu der Membran 33 druckfest und/oder feuerfest ausgebildet. Weiter ist in dem Spalt 32 eine thermische Isolationsschicht 39 angeordnet, die aus einem nicht brennbaren Isolierstoff besteht und das Schott 36 gegenüber hohen Temperaturen abschirmt.

Die **Fig. 3** zeigt eine dritte Ausführungsform einer Prüfkammer 40 bei der im Unterschied zu der Prüfkammer aus der **Fig. 2** eine Membran 41 vorgesehen ist, die flexibel und zumindest teilweise oder vollständig gasdicht ausgebildet ist und von einer weiteren Membran 42, welche ein Schott 43 ausbildet, überdeckt ist. Die weitere Membran 42 ist im Vergleich zu der Membran 41 druckfest und/oder feuerfest ausgebildet und deckt die Membran 41 gegenüber einem Prüfraum 44 ab. Das Schott 43 weist darüber hinaus eine zweite flexible Membran 45 auf. Die zweite Membran 45 ist an einer Wand 46 der Prüfkammer 40 befestigt und in Art eines Dichtelements an eine Seitenfläche 47 eines Gehäuses 48 einer Vibratorvorrichtung 49 angelegt.

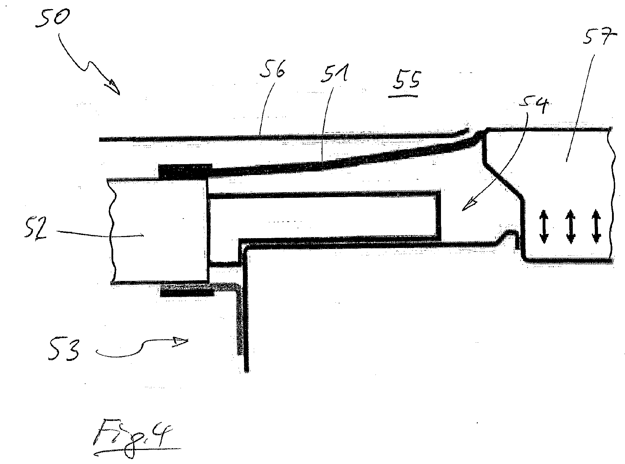

Die **Fig. 4** zeigt eine vierte Ausführungsform einer Prüfkammer 50 bei der im Unterschied zu der Prüfkammer aus der **Fig. 2** eine Membran 51 vorgesehen ist, die flexibel und zumindest teilweise oder vollständig gasdicht ausgebildet ist. In einem so zwischen einer Wand 52 und einer Vibratorvorrichtung 53 ausgebildeten Spalt 54 ist zur Abdichtung des Spalts 54 bzw. eines Prüfraums 55 eine Manschette 56 aus Metallblech angeordnet. Die Manschette 56 überbrückt die Membran 51 bis hin zu einem Vibrator 57 der Vibratorvorrichtung 53. Die Manschette 56 ist starr ausgebildet, und noch so weit von der Vibratorvorrichtung 53 beabstandet, dass eventuelle Vibrationen nicht wesentlich auf Manschette 56 übertragen werden.

## Patentansprüche

1. Prüfkammer (10, 27, 40, 50), umfassend einen gegenüber einer Umgebung (26) verschließbaren und temperaturisolierten Prüfraum (11, 29, 44, 55) zur Aufnahme von Prüfgut (12), und eine Temperiervorrichtung zur Temperierung des Prüfraums, wobei die Prüfkammer eine Vibratorvorrichtung (15, 31, 49, 53) umfasst, die in einer in einer Wand (20, 28, 46, 52) des Prüfraums ausgebildeten Öffnung (21, 30) angeordnet ist, wobei Prüfgut innerhalb des Prüfraums auf einem Vibrator (14, 34, 57) der Vibratorvorrichtung anordbar und entsprechend einem vorbestimmten Prüfablauf in einem Prüfzeitabschnitt mechanische Schwingungen am Prüfgut und ein Temperaturwechsel im Prüfraum ausbildbar sind, wobei ein zwischen der Wand und der Vibratorvorrichtung ausgebildeter Spalt (22, 32, 54) mittels einer flexiblen Membran (23, 33, 41, 51) der Prüfkammer abgedichtet ist,
**dadurch gekennzeichnet,**
**dass** ein Schott (24, 36, 43) der Prüfkammer die Wand und die Vibratorvorrichtung verbindet, wobei das Schott im Vergleich zu der Membran druckfester und/oder feuerfester ausgebildet ist, wobei das Schott eine in dem Spalt angeordnete thermische Isolationsschicht (39) umfasst.

2. Prüfkammer nach Anspruch 1,
**dadurch gekennzeichnet,**
**dass** die Membran (23, 36, 43, 51) den Spalt (22, 32, 54) zwischen der Wand (20, 28, 46, 52) und dem Vibrator (14, 34, 57) überbrückt.

3. Prüfkammer nach Anspruch 1 oder 2,
**dadurch gekennzeichnet,**
**dass** das Schott (24, 36, 43) den Spalt (22, 32) zwischen der Wand (20, 28, 46) und einem Gehäuse (16, 48) der Vibratorvorrichtung (15, 31, 49) oder den Spalt zwischen der Wand und dem Vibrator (14, 34) überbrückt.

4. Prüfkammer nach einem der vorangehenden Ansprüche,
**dadurch gekennzeichnet,**
**dass** das Schott (24, 36, 43) im Vergleich zu der Membran (23, 33, 41, 51) chemikalienbeständig ausgebildet ist.

5. Prüfkammer nach einem der vorangehenden Ansprüche,
**dadurch gekennzeichnet,**
**dass** das Schott (43) durch eine weitere Membran (42) ausgebildet ist, wobei die weitere Membran die Membran (41) gegenüber dem Prüfraum abdeckt.

6. Prüfkammer nach Anspruch 5,
**dadurch gekennzeichnet,**
**dass** das Schott (43) eine zweite flexible Membran (45) aufweist, wobei die zweite Membran die weitere Membran (42) gegenüber der Umgebung (26) abdeckt.

7. Prüfkammer nach einem der Ansprüche 1 bis 4,
**dadurch gekennzeichnet,**
**dass** das Schott (36) durch eine Labyrinthdichtung (37) ausgebildet ist, wobei Lamellen (38) der Labyrinthdichtung derart ausgebildet sind, dass eine Relativbewegung von Vibratorvorrichtung (31) und Wand (28) ermöglicht wird.

8. Prüfkammer nach einem der Ansprüche 1 bis 4,
**dadurch gekennzeichnet,**
**dass** das Schott durch eine Profildichtung ausgebildet ist, wobei Dichtelemente der Profildichtung derart ausgebildet sind, dass eine Relativbewegung von Vibratorvorrichtung (15, 31, 49, 53) und Wand (20, 28, 46, 52) ermöglicht wird, und wobei die Dichtelemente bei einer unerwarteten Druckerhöhung innerhalb des Prüfraums dichtend zur Anlage gelangen.

9. Prüfkammer nach einem der Ansprüche 1 bis 4,
**dadurch gekennzeichnet,**
**dass** das Schott durch eine Gleitdichtung ausgebildet ist, wobei Dichtelemente der Gleitdichtung derart ausgebildet sind, dass eine Relativbewegung von Vibratorvorrichtung (15, 31, 49, 53) und Wand (20, 28, 46, 52) ermöglicht wird.

10. Prüfkammer nach einem der Ansprüche 1 bis 4,
**dadurch gekennzeichnet,**
**dass** das Schott (24) mit einer Manschette (25, 56) aus Metall ausgebildet ist.

11. Prüfkammer nach Anspruch 10,
**dadurch gekennzeichnet,**
**dass** die Manschette (25, 56) an der Wand (20, 52) und/oder der Vibratorvorrichtung (15, 53) starr befestigt ist.

12. Prüfkammer nach Anspruch 10 oder 11,
**dadurch gekennzeichnet,**
**dass** das Schott als Einhausung der Vibratorvorrichtung ausgebildet ist, wobei die Einhausung ein Gehäuse der Vibratorvorrichtung vollständig umgibt oder einschließt.

13. Prüfkammer nach einem der vorangehenden Ansprüche,
**dadurch gekennzeichnet,**
**dass** die Prüfkammer (10, 27, 40, 50) eine Temperiervorrichtung zur Temperierung des Prüfraums (11, 29, 44, 55) aufweist, wobei mittels der Temperiervorrichtung eine Temperatur in einem Temperaturbereich von -70 °C bis +180 °C, vorzugsweise -80 °C bis +200 °C, innerhalb des Prüfraums ausbildbar ist, wobei die Temperiervorrichtung eine Kühleinrichtung mit einem Kühlkreislauf mit einem Kältemittel, einem Wärmeübertrager, der in dem Prüfraum angeordnet ist, einem Verdichter, einem Kondensator und einem Expansionsorgan aufweist, wobei die Temperiervorrichtung eine Heizeinrichtung mit einer Heizung und einem weiteren Wärmeübertrager aufweist.

14. Prüfkammer nach einem der vorangehenden Ansprüche,
**dadurch gekennzeichnet,**
**dass** die Prüfkammer (10, 27, 40, 50) eine Steuervorrichtung zur Einstellung einer physikalischen Prüfbedingung durch eine Steuerung und/oder Regelung einer Lufttemperatur, einer relativen Luftfeuchte, einer Korrosionsatmosphäre in dem Prüfraum (11, 29, 44, 55) und/oder einer Bauteilfestigkeit aufweist.

15. Verfahren zum Testen von Prüfgut (12) in einem gegenüber einer Umgebung (26) verschließbaren und temperaturisolierten Prüfraum (11, 29, 44, 55) einer Prüfkammer (10, 27, 40, 50), wobei mittels einer Temperiervorrichtung der Prüfkammer der Prüfraum mit dem Prüfgut temperiert wird, wobei Prüfgut innerhalb des Prüfraums auf einem Vibrator (14, 34, 57) einer Vibratorvorrichtung (15, 31, 49, 53) der Prüfkammer angeordnet und entsprechend einem vorbestimmten Prüfablauf in einem Prüfzeitabschnitt mechanische Schwingungen am Prüfgut und ein Temperaturwechsel im Prüfraum ausgebildet werden, wobei die Vibratorvorrichtung in einer in einer Wand (20, 28, 46, 52) des Prüfraums ausgebildeten Öffnung (21, 30) angeordnet wird, wobei zwischen der Wand und der Vibratorvorrichtung ein Spalt (22, 32, 54) ausgebildet wird, wobei der Spalt mittels einer flexiblen Membran (23, 33, 41) der Prüfkammer abgedichtet wird,
**dadurch gekennzeichnet,**
**dass** die Wand und die Vibratorvorrichtung mit einem Schott (24, 36, 43) der Prüfkammer verbunden werden, wobei das Schott im Vergleich zu der Membran druckfester und/oder feuerfester ausgebildet wird, wobei das Schott eine in dem Spalt angeordnete thermische Isolationsschicht (39) umfasst.

16. Verfahren nach Anspruch 15,
**dadurch gekennzeichnet,**
**dass** als Prüfgut (12) eine Batterie oder ein Akkumulator, bevorzugt ein Lithium-Ionen-Akkumulator verwendet wird.

17. Verfahren nach Anspruch 15 oder 16,
**dadurch gekennzeichnet,**
**dass** das Prüfgut (12) in dem Prüfraum (11, 29, 44, 55) betrieben und zumindest einer physikalischen Prüfbedingung ausgesetzt wird.

## Claims

1. A test chamber (10, 27, 40, 50), comprising a temperature-insulated test space (11, 29, 44, 55), which is sealable against an environment (26), for receiving test material (12) and a temperature control device for controlling a temperature of the test space, the test chamber comprising a vibration device (15, 31, 49, 53) which is disposed in an opening (21, 30) formed in a wall (20, 28, 46, 52) of the test space, test material being disposed within the test space on a vibrator (14, 34, 57) of the vibration device and mechanical vibrations of the test material and a temperature change in the test space being realized within a test time segment according to a prespecified test sequence, a gap (22, 32, 54), which is formed between the wall and the vibration device, being sealed by means of a flexible membrane (23, 33, 41, 51) of the test chamber,
**characterized in that**
a bulkhead (24, 36, 43) of the test chamber connects the wall and the vibration device, the bulkhead being more pressure-resistant and/or fire-resistant compared to the membrane, the bulkhead comprising a thermal insulation layer (39) which is disposed in the gap.

2. The test chamber according to claim 1,
**characterized in that**
the membrane (23, 36, 43, 51) bridges the gap (22, 32, 54) between the wall (20, 28, 46, 52) and the vibrator (14, 34, 57).

3. The test chamber according to claim 1 or 2,
**characterized in that**
the bulkhead (24, 36, 43) bridges the gap (22, 32) between the wall (20, 28, 46) and a housing (16, 48) of the vibration device (15, 31, 49) or the gap between the wall and the vibrator (14, 34).

4. The test chamber according to any one of the preceding claims,
**characterized in that**
the bulkhead (24, 36, 43) is chemical-resistant compared to the membrane (23, 33, 41, 51).

5. The test chamber according to any one of the preceding claims,
**characterized in that**
the bulkhead (43) is realized by an additional membrane (42), the additional membrane covering the membrane (41) from the test space.

6. The test chamber according to claim 5,
**characterized in that**
the bulkhead (43) has a second flexible membrane (45), the second membrane covering the additional membrane (42) from the environment (26).

7. The test chamber according to any one of the claims 1 to 4,
**characterized in that**
the bulkhead (36) is realized by a labyrinth seal (37), fins (38) of the labyrinth seal being realized such that a relative movement of the vibration device (31) and the wall (28) is allowed.

8. The test chamber according to any one of the claims 1 to 4,
**characterized in that**
the bulkhead is realized by a profile seal, sealing elements of the profile seal being realized such that a relative movement of the vibration device (15, 31, 49, 53) and the wall (20, 28, 46, 52) is allowed and the sealing elements establishing sealing contact when pressure unexpectedly increases in the test space.

9. The test chamber according to any one of the claims 1 to 4,
**characterized in that**
the bulkhead is realized by a sliding seal, sealing elements of the sliding seal being realized such that a relative movement of the vibration device (15, 31, 49, 53) and the wall (20, 28, 46, 52) is allowed.

10. The test chamber according to any one of the claims 1 to 4,
**characterized in that**
the bulkhead (24) is realized having a sleeve (25, 56) made of metal.

11. The test chamber according to claim 10,
**characterized in that**
the sleeve (25, 56) is rigidly mounted on the wall (20, 52) and/or the vibration device (15, 53).

12. The test chamber according to claim 10 or 11,
**characterized in that**
the bulkhead is realized as a housing of the vibration device, the housing entirely surrounding or encircling a casing of the vibration device.

13. The test chamber according to any one of the preceding claims,
**characterized in that**
the test chamber (10, 27, 40, 50) has a temperature control device for controlling a temperature of the test space (11, 29, 44, 55), a temperature ranging from -70 °C to +180 °C, preferably -80 °C to +200 °C, being generated within the test space by means of the temperature control device, the temperature control device having a cooling device having a cooling circuit having a refrigerant, a heat exchanger, which is disposed in the test space, a compactor, a condenser and an expansion means, the temperature control device having a heating device having a heater and an additional heat exchanger.

14. The test chamber according to any one of the preceding claims,
**characterized in that**
the test chamber (10, 27, 40, 50) has a control device for setting a physical test condition by controlling and/or regulating an air temperature, a relative air humidity, a corrosion atmosphere within the test space (11, 29, 44, 55) and/or a component strength.

15. A method for testing test material (12) in a temperature-insulated test space (11, 29, 44, 55) of a test chamber (10, 27, 40, 50) sealable against an environment (26), a temperature of the test space having the test material being controlled by means of a temperature control device of the test chamber, test material being disposed within the test space on a vibrator (14, 34, 57) of a vibration device (15, 31, 49, 53) of the test chamber and mechanical vibrations of the test material and a temperature change in the test space being realized within a test time segment according to a pre-specified test sequence, the vibration device being disposed in an opening (21, 30) which is formed in a wall (20, 28, 46, 52) of the test space, a gap (22, 32, 54) being formed between the wall and the vibration device, the gap being sealed by means of a flexible membrane (23, 33, 41) of the test chamber,
**characterized in that**
the wall and the vibration device are connected to a bulkhead (24, 36, 43) of the test chamber, the bulkhead being more pressure-resistant and/or fire-resistant compared to the membrane, the bulkhead comprising a thermal insulation layer (39) which is disposed in the gap.

16. The method according to claim 15,
**characterized in that**
a battery or an accumulator, preferably a lithium-ion accumulator, is used as test material (12).

17. The method according to claim 15 or 16,
**characterized in that**
the test material (12) is operated in the test space (11, 29, 44, 55) and exposed to at least one physical test condition.

## Revendications

1. Chambre de test (10, 27, 40, 50), comprenant un espace de test (11, 29, 44, 55), qui est isolé en température et qui peut être fermé en regard d'un environnement (26) et qui sert à recevoir du matériau de test (12), et un dispositif de régulation de température pour réguler une température de l'espace de test, la chambre de test comprenant un dispositif de vibration (15, 31, 49, 53) qui est disposé dans un évidement (21, 30) formé dans une paroi (20, 28, 46, 52) de l'espace de test, le matériau de test étant disposé dans l'espace de test sur un vibrateur (14, 34, 57) du dispositif de vibration et des vibrations mécaniques du matériau de test et un changement de température dans l'espace de test étant réalisés dans une tranche horaire de test selon une séquence de test prédéterminée, une fente (22, 32, 54), qui est formée entre la paroi et le dispositif de vibration, étant étanchée au moyen d'une membrane (23, 33, 41, 51) flexible de la chambre de test,
**caractérisée en ce**
**qu'**une cloison (24, 36, 43) de la chambre de test relie la paroi et le dispositif de vibration, la cloison étant plus résistante à l'épreuve de la pression et/ou au feu comparée à la membrane, la cloison comprenant une couche isolée thermique (39) disposée dans la fente.

2. Chambre de test selon la revendication 1,
**caractérisée en ce que**
la membrane (23, 36, 43, 51) ferme la fente (22, 32, 54) entre la paroi (20, 28, 46, 52) et le vibrateur (14, 34, 57).

3. Chambre de test selon la revendication 1 ou la revendication 2,
**caractérisée en ce que**
la cloison (24, 36, 43) ferme la fente (22, 32) entre la paroi (20, 28, 46) et un boîtier (16, 48) du dispositif de vibration (15, 31, 49) ou la fente entre la paroi et le vibrateur (14, 34).

4. Chambre de test selon l'une quelconque des revendications précédentes,
**caractérisée en ce que**
la cloison (24, 36, 43) est résistante aux produits chimiques comparée à la membrane (23, 33, 41, 51).

5. Chambre de test selon l'une quelconque des revendications précédentes,
**caractérisée en ce que**
la cloison (43) est réalisée par une membrane (42) additionnelle, la membrane additionnelle couvrant la membrane (41) en regard de l'espace de test.

6. Chambre de test selon la revendication 5,
**caractérisée en ce que**
la cloison (43) a une deuxième membrane (45) flexible, la deuxième membrane couvrant la membrane (42) additionnelle en regard de l'environnement (26).

7. Chambre de test selon l'une quelconque des revendications 1 à 4,
**caractérisée en ce que**
la cloison (36) est réalisée par un joint de labyrinthe (37), des lamelles (38) du joint de labyrinthe étant réalisées de telle manière qu'une mouvement relative du dispositif de vibration (31) et la paroi (28) est rendue possible.

8. Chambre de test selon l'une quelconque des revendications 1 à 4,
**caractérisée en ce que**
la cloison est réalisée par un joint de profile, des éléments d'étanchéité du joint de profile étant réalisés de telle manière qu'une mouvement relative du dispositif de vibration (15, 31, 49, 53) et la paroi (20, 28, 46, 52) est rendue possible, et les éléments d'étanchéité établissant un contact étanchant quand la pression augmente de façon inattendue dans l'espace de test.

9. Chambre de test selon l'une quelconque des revendications 1 à 4,
**caractérisée en ce que**
la cloison est réalisé par un joint glissant, des éléments d'étanchéité du joint glissant étant réalisés de telle manière qu'une mouvement relative du dispositif de vibration (15, 31, 49, 53) et la paroi (20, 28, 46, 52) est rendue possible.

10. Chambre de test selon l'une quelconque des revendications 1 à 4,
**caractérisée en ce que**
la cloison (24) est réalisée ayant une coupelle (25, 56) en métal.

11. Chambre de test selon la revendication 10,
**caractérisée en ce que**
la coupelle (25, 56) est montée rigidement sur la paroi (20, 52) et/ou sur le dispositif de vibration (15, 53).

12. Chambre de test selon la revendication 10 ou 11,
**caractérisée en ce que**
la cloison est réalisée comme boîtier du dispositif de vibration, le boîtier entourant ou encerclant entièrement une caisse du dispositif de vibration.

13. Chambre de test selon l'une quelconque des revendications précédentes,
**caractérisée en ce que**
la chambre de test (10, 27, 40, 50) a un dispositif de régulation de température pour contrôler une température de l'espace de test (11, 29, 44, 55), une température variant de -70 °C à +180 °C, de préférence de -80 °C à +200 °C, étant générée dans l'espace de test au moyen du dispositif de régulation de température, le dispositif de régulation de température ayant un dispositif de refroidissement ayant un circuit de refroidissement ayant un réfrigérant, un échangeur de chaleur, qui est disposé dans l'espace de test, un compresseur, un condensateur et un moyen d'expansion, le dispositif de régulation de température ayant un dispositif de chaleur ayant un chauffage et un échangeur de chaleur additionnel.

14. Chambre de test selon l'une quelconque des revendications précédentes,
**caractérisée en ce que**
la chambre de test (10, 27, 40, 50) a un dispositif de contrôle pour mettre en place une condition de test physique en contrôlant et/ou en régulant une température de l'air, une humidité relative de l'air, une corrosion atmosphérique dans l'espace de test (11, 29, 44, 55) et/ou a solidité de composants.

15. Procédé pour tester du matériau de test (12) dans un espace de test (11, 29, 44, 55), qui est isolé en température d'une chambre de test (10, 27, 40, 50) et qui peut être fermé en regard d'un environnement (26), une température de l'espace de test ayant le matériau de test étant contrôlée au moyen d'un dispositif de régulation de température de la chambre de test, le matériau de test étant disposé dans l'espace de test sur un vibrateur (14, 34, 57) du dispositif de vibration (15, 31, 49, 53) de la chambre de test et des vibrations mécaniques du matériau de test et un changement de température dans l'espace de test étant réalisés dans une tranche horaire de test selon une séquence de test prédéterminée, le dispositif de vibration étant disposé dans un évidement (21, 30) qui est formé dans une paroi (20, 28, 46, 52) de l'espace de test, une fente (22, 32, 54) étant formée entre la paroi et le dispositif de vibration, la fente étant étanchée au moyen d'une membrane (23, 33, 41) flexible de la chambre de test,
**caractérisée en ce que**
la paroi et le dispositif de vibration sont reliés à une cloison (24, 36, 43) de la chambre de test, la cloison étant plus résistante à l'épreuve de la pression et/ou au feu comparée à la membrane, la cloison comprenant une couche isolée thermique (39) qui est disposée dans la fente.

16. Procédé selon la revendication 15,
**caractérisée en ce**
**qu'**une batterie ou un accumulateur, de préférence une batterie ion-lithium, est utilisé comme matériau de test (12).

17. Procédé selon la revendication 15 ou la revendication 16,
**caractérisée en ce que**
le matériau de test (12) est opéré dans l'espace de test (11, 29, 44, 55) et est exposé à au moins une condition de test physique.
